# EUROPÄISCHE PATENTANMELDUNG

(11) **EP 0 584 612 A1**
(43) Veröffentlichungstag der Anmeldung: **02.03.1994**
(21) Anmeldenummer: 93112614.8
(22) Anmeldetag: 06.08.1993
(51) Int. Cl.: C08J 11/06, C08J 9/14, C08L 25/04

(54) **Polystyrol-Recyclat-Formkörper**

(30) Priorität: 28.08.1992 DE 9211584 U
(71) Anmelder: Heidelberger Kunststofftechnik GmbH, D-69115 Heidelberg (DE)
(72) Erfinder: Wolf, Axel, Dipl.-Ing., D-69469 Weinheim (DE)
(74) Vertreter: Ratzel, Gerhard, Dr.

(57) **Zusammenfassung**

Die Erfindung betrifft einen Polystyrol-Recyclat-Formkörper der dadurch erhlätlich ist,
daß Abfall-Polystyrol-Schaum unter Entweichenlassen von eingeschlossener Luft zu Polystyrol eingeschmolzen und die Schmelze sodann nach Zugabe von Treibmittel, beispielsweise von Pentan in expandiertes Polystyrol übergeführt wird.

## Beschreibung

Die Erfindung betrifft einen neuen Polystyrol-Recyclat-Formkörper, der dadurch erhältlich ist, daß man Abfall-Polystyrol-Schaum unter Entweichenlassen von eingeschlossener Luft zu Polystyrol einschmilzt und man die Schmelze sodann nach Zugabe von Treibmittel in expandiertes Polystyrol überführt.

Nach einer bevorzugten Ausführungsform ist der erfindungsgemäße Polystyrol-Recyclat-Formkörper dadurch gekennzeichnet, daß er dadurch erhältlich ist, daß Abfall-Polystyrol-Schaum unter Entweichenlassen von eingeschlossener Luft zu Polystyrol eingeschmolzen und die Schmelze sodann nach Zugabe von Pentan als Treibmittel in expandiertes Polystyrol übergeführt wird.

Nach einer weiteren bevorzugten Ausführungsform ist der Polystyrol-Recyclat-Formkörper dadurch gekennzeichnet, daß er dadurch erhältlich ist, daß der Abfall-Polystyrol-Schaum vor dem Einschmelzvorgang zerkleinert wird, wobei die Zerkleinerung gegebenenfalls im Brecher durchgeführt wird.

Nach einer weiteren bevorzugten Ausführungsform ist der Polystyrol-Recyclat-Formkörper dadurch gekennzeichnet, daß er dadurch erhältlich ist, daß man die Schmelze auf eine Temperatur unterhalb der Schmelztemperatur abkühlt, in Fäden preßt und die gekühlten Fäden in Stücke zerkleinert, das entstandene Produkt von neuem in einem anderen Extruder aufschmilzt, mit Treibmittel versieht, das mit hohem Druck eingepreßt wird, wobei das Extrudat den Extruder bei Temperaturen unterhalb 150°C über eine Breitschlitzdüse als weichen Schaum verläßt und schließlich nach Kalibrierung eine Ausformung durchführt.

Nach einer weiteren bevorzugten Ausführungsform ist der erfindungsgemäße Polystyrol-Recyclat-Formkörper dadurch gekennzeichnet, daß er dadurch erhältlich ist, daß der Schäumungsprozeß im Kopf des Extruders stattfindet.

Nach einer weiteren bevorzugten Ausführungsform ist der Polystyrol-Recyclat-Formkörper dadurch gekennzeichnet, daß er dadurch erhältlich ist, daß er in Gestalt sogenannter Endlosplatten produziert, in die gewünschten Längen und Breiten geschnitten und sodann der Weiterverarbeitung, beispielsweise als Bauplatte, zugeführt wird.

Nach einer weiteren bevorzugten Ausführungsform ist der Polystyrol-Recyclat-Formkörper dadurch gekennzeichnet, daß er dadurch erhältlich ist, daß der erhaltene Roh-Formkörper aus expandiertem Polystyrol an der Ober- und Unterseite gehobelt wird.

Nach einer weiteren bevorzugten Ausführungsform ist der Polystyrol-Recyclat-Formkörper dadurch gekennzeichnet, daß er dadurch erhältlich ist, daß ihm ein Flammwidrigkeitszusatz beigegeben ist, wodurch ein schwer entflammbarer Formkörper gemäß Baustoffklasse B1 erhalten wird.

Als Ausgangsmaterial zur Herstellung des erfindungsgemäßen Polystyrol-Recyclat-Formkörpers eignen sich beispielsweise benutzte Verpackungspolster aus expandiertem Polystyrol und allgemein gesagt Formteile oder Formstücke oder Formkörper aus expandiertem Polystyrol, die generell geschlossenzellig sind. Gleiches gilt für Partikelschaumformkörper.

Die Porengröße innerhalb der Partikel des Ausgangsmaterials liegt zum Beispiel im Bereich von etwa 1/100 mm; die Poren sind mit bloßem Auge kaum erkennbar. Man nennt einen solchen Schaum auch Partikelschaum.

Vorzugsweise wird das Polystyrol-Recyclat im sogenannten Entgasungsextruder hergestellt, wobei die Schmelze beispielsweise eine Temperatur unterhalb 200°C aufweist. Die Schmelze wird sodann beispielsweise durch Anwendung von Luft und/oder Wasser als Kühlmittel abgekühlt und in Fäden gepreßt.

Die gekühlten Fäden werden in Stücke abgehackt, womit das Vorprodukt erhalten ist. Dieses Produkt wird in einem weiteren Extruder, vorzugweise einem Schneckenextruder erneut aufgeschmolzen, mit Treibmittel, vorzugsweise mit Pentan versehen, das mit hohem Druck eingepreßt wird; als weicher Schaum verläßt das Extrudat den Extruder, wobei dieser Schaum vorzugsweise eine Temperatur von unterhalb 150°C aufweist und durch eine Breitschlitzdüse und schließlich in einem Kühlkalibrator dimensioniert und ausgeformt wird.

Der eigentliche Schäumungsprozeß findet im Kopf des Extruders statt.

Die in der beschriebenen Weise hergestellte Platte wird quasi endlos produziert, in die gewünschten Abmessungen geschnitten und der jeweiligen Weiterverarbeitung zugeführt, beispielsweise der Anwendung als Bauplattten.

Die Ober- und Unterseiten der erfindungsgemäßen Polystyrol-Recyclat-Platten können beispielsweise auch gehobelt werden.

Das Endprodukt, nämlich die Polystyrol-Recyclat-Formkörper haben eine homogene Zellstruktur und sind geschlossenporig.

Die obigen Ausführungen zeigen eine beispielhafte Verfahrensweise des Erhalts der erfindungsgemäßen Polystyrol-Recyclat-Formkörper.

Diese erfüllen die Erfordernisse der DIN 18 164, Teil 1, mit der Bezeichnung: Schaumkunststoffe als Dämmstoffe für das Bauwesen.

So liegt beispielsweise die Rohdichte in trockenem Zustand im Bereich von 25 bis 35 kg/m , womit deren Anwendung auch als druckbelastete und gegebenenfalls sehr hoch druckbelastete Wärmedämmstoffe belegt ist.

Die Schaumstoffe dieser Norm können nach folgenden Herstellungsarten gefertigt sein:
a) Platten oder Bahnen, die aus Blöcken in Nennmaßen geschnitten werden (Blockware)
b) Platten oder Bahnen, die in kontinuierlichem Band gefertigt und dann auf Nennmaße geschnitten werden (Bandware)
c) Platten, die unmittelbar in Nennmaßen gefertigt werden (Automatenplatten).

Auch bezüglich den Anforderungen an die Eigenschaften, insbesondere bezüglich der Beschaffenheit, der Maße, der Rohdichte, der Zugfestigkeit und der Druckspannung bei 10 % Stauchung, ferner die Wärmeleitfähigkeit, das Brandverhalten, die Formbeständigkeit bei Wärmeeinwirkung, ferner die Forderungen bezüglich der irreversiblen Längenänderungen und der Alterungsbeständigkeit gemäß DIN 18 164, Teil 1, werden von den erfindungsgemäßen Polystyrol-Recyclat-Formkörpern erfüllt.

Wie bereits ausgeführt ist, kann der erfindunsgemäße Polystyrol-Recyclat-Formkörper einen Flammwidrigkeitszusatz enthalten; dieser wird vorzugsweise in der letzten Extrusionsphase hinzugegeben.

Hierdurch wird ein schwer entflammbarer Formkörper gemäß Baustoffklasse B1 erhalten.

Ferner kann man vorzugsweise in der letzten Extrusionsphase gegebenenfalls auch farbgebende Zusätze und/oder Nukleierungsmittel zur Erreichung einer möglichst gleichmäßigen Porendimension und/oder alle anderen an sich bekannten Zusatzmittel zur Verbesserung des Schaums zugeben.

## Patentansprüche

1. Polystyrol-Recyclat-Formkörper,
dadurch gekennzeichnet,
daß er dadurch erhältlich ist,
daß Abfall-Polystyrol-Schaum unter Entweichenlassen von eingeschlossener Luft zu Polystyrol eingeschmolzen und die Schmelze sodann nach Zugabe von Treibmittel in expandiertes Polystyrol übergeführt wird.

2. Polystyrol-Recyclat-Formkörper,
dadurch gekennzeichnet,
daß er dadurch erhältlich ist,
daß Abfall-Polystyrol-Schaum unter Entweichenlassen von eingeschlossener Luft zu Polystyrol eingeschmolzen und die Schmelze sodann nach Zugabe von Pentan als Treibmittel in expandiertes Polystyrol übergeführt wird.

3. Polystyrol-Recyclat-Formkörper nach Anspruch 1 - 2,
dadurch gekennzeichnet,
daß er dadurch erhältlich ist,
daß der Abfall-Polystyrol-Schaum vor dem Einschmelzvorgang zerkleinert wird.

4. Polystyrol-Recyclat-Formkörper nach Anspruch 3,
dadurch gekennzeichnet,
daß er dadurch erhältlich ist,
daß die Zerkleinerung im Brecher stattfindet.

5. Polystyrol-Recyclat-Formkörper nach Anspruch 1 - 4,
dadurch gekennzeichnet,
daß er dadurch erhältlich ist,
daß man die Schmelze auf eine Temperatur unterhalb der Schmelztemperatur abkühlt, in Fäden preßt und die gekühlten Fäden in Stücke zerkleinert, das entstandene Produkt von neuem in einem anderen Extruder aufschmilzt, mit Treibmittel versieht, das mit hohem Druck eingepreßt wird, wobei das Extrudat den Extruder bei Temperaturen unterhalb 150°C über eine Breitschlitzdüse als weichen Schaum verläßt und schließlich nach Kalibrierung eine Ausformung durchführt.

6. Polystyrol-Recyclat-Formkörper nach Anspruch 5,
dadurch gekennzeichnet,
daß er dadurch erhältlich ist,
daß der Schäumungsprozeß im Kopf des Extruders stattfindet.

7. Polystyrol-Recyclat-Formkörper nach Anspruch 1 - 6,
dadurch gekennzeichnet,
daß er dadurch erhältlich ist,
daß der Formkörper in Gestalt sogenannter Endlosplatten produziert, in die gewünschten Längen und Breiten geschnitten und sodann der Weiterverarbeitung, beispielsweise als Bauplatte, zugeführt wird.

8. Polystyrol-Recyclat-Formkörper nach Anspruch 1 - 7,
dadurch gekennzeichnet,
daß er dadurch erhältlich ist,
daß der erhaltene Roh-Formkörper aus expandiertem Polystyrol an der Ober- und Unterseite gehobelt wird.

9. Polystyrol-Recyclat-Formkörper nach Anspruch 1 - 8,
dadurch gekennzeichnet,
daß er dadurch erhältlich ist,
daß ihm ein Flammwidrigkeitszusatz beigegeben ist, wodurch ein schwer entflammbarer Formkörper gemäß Baustoffklasse B1 erhalten wird.
